Europäisches Patentamt

European Patent Office

Office européen des brevets

(11) Publication number: **0 320 206**
**A1**

## (12) EUROPEAN PATENT APPLICATION

(21) Application number: **88311537.0**

(22) Date of filing: **06.12.88**

(51) Int. Cl.4: **B60S 1/38**

(30) Priority: **08.12.87 JP 186016/87**
**08.09.88 JP 117433/88**

(43) Date of publication of application:
**14.06.89 Bulletin 89/24**

(84) Designated Contracting States:
**DE FR GB**

(71) Applicant: **NIPPON WIPER BLADE CO., LTD.**
**998, Oaza Kamiochiai**
**Yono-shi Saitama 338(JP)**

(72) Inventor: **Arai, Masaru**
**Nippon Wiperblade Co. Ltd. 998, Oaza**
**Kamiochiai**
**Yono-Shi Saitama-Ken 338(JP)**
Inventor: **Saita, Itsuro**
**Nippon Wiperblade Co. Ltd. 998, Oaza**
**Kamiochiai**
**Yono-Shi Saitama-Ken 338(JP)**

(74) Representative: **Spall, Christopher John et al**
**BARKER, BRETTELL & DUNCAN 138 Hagley**
**Road**
**Edgbaston Birmingham B16 9PW(GB)**

(54) **Blade rubber of windshield wiper.**

(57) A blade rubber of a windshield wiper comprises a generally inverted triangular shaped lip (9) of which the lower end is adapted to contact a surface to be wiped, and a supporting portion (6) integrally connected to the lip and adapted to be connected to a wiperblade. A restricting portion (8, 8) is provided adjacent to at least one side of the lip (9) and is located in a position normally spaced from the lower end of the lip (9). The restricting portion is adapted to engage with the lip (9) thereby to prevent excessive resilient deformation of the lip (9)

FIG. 1

## BLADE RUBBER of WINDSHIELD WIPER

Field of the Invention

The present invention relates to a windshield wiper for use in a vehicle such as an automobile, and particularly, to a blade rubber of the windshield wiper.

Description of Prior Art

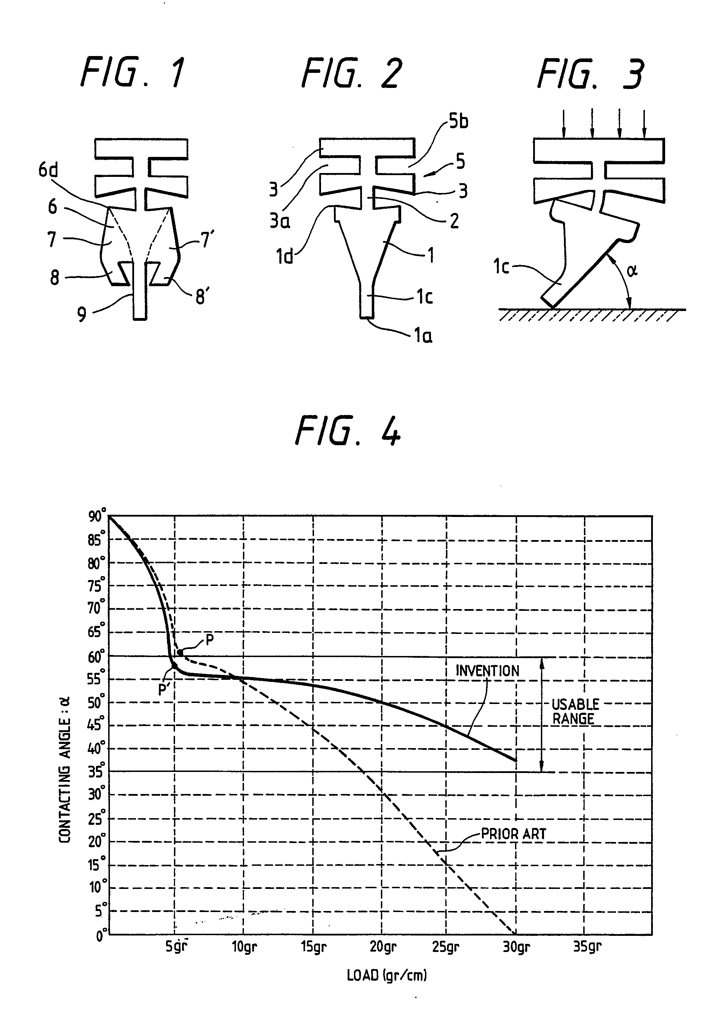

A typical blade rubber 5 of prior art windshield wiper is shown in Fig. 2, which comprises a generally inverted triangular shaped lip portion 1 having on the lower end a generally rectangular shaped lip 1c defining on the lower end a wiping edge 1a, a connecting portion 2, and a supporting portion 3 connected to the lip portion 1 through the connecting portion 2. There are provided in opposite side surface of the supporting portion 3 longitudinally extending grooves 3a and 3b for receiving therein a backing member (usually metal strips, not shown in the drawing) and for connecting the blade rubber to a wiperblade (not shown in the drawing).

Fig. 3 shows the blade rubber of Fig. 2 in the operating condition, whereat the lip lc is inclined by an angle $\alpha$ in contacting with a windshield glass. The contacting angle $\alpha$ is very important for attaining uniform contacting pressure in the longitudinal direction and for attaining good wiping effects, and the angle $\alpha$ is preferably about 35° ~ 60°.

However, when the load pressing the blade rubber against the windshield glass increases, the angle $\alpha$ decreases. Since the optimum contacting angle $\alpha$ is limited, the range of the load for attaining the optimum contacting angle is also limited. For solving the problem, there has been proposed to uniform the load distribution in the longitudinal direction by increasing the number of yokes supporting the blade rubber, or to increase the rigidity of the backing member. But the former is defective in complicating the construction of the wiperblade and increasing the cost, and the latter is defective in applying the wiper on a curved glass.

For applying on a high speed vehicle, a wiper arm applies a relatively high load, and the blade rubber is formed to have a large thickness or a short length lip, whereby desired wiping characteristics can be obtained at the low and medium speed, but at the high speed, the load decreases due to the wind pressure and it has been difficult to obtain desired wiping characteristics.

Further, there are problems in matching the blade rubber with various types of vehicles, which increases the types and kinds of the blade rubber, thereby causing the problems in manufacture, storage and circulation of the blade rubber.

The present invention has been made in view of the circumstances aforementioned, and aims to provide a blade rubber of a windshield wiper applicable to wipers having various load distribution.

Summary of the Invention

According to the invention, there is provided a blade rubber of a windshield wiper and comprising a supporting portion adapted to be connected to a wiperblade, a generally rectangular shaped lip connected to and supported by the supporting portion with the lower end of which being adapted to contact with a surface being wiped, and at least one restricting portion being provided adjacent to at least one side of the lip for preventing the lip from excessive resilient deformation.

Preferably, there are provided restricting portions adjacent to the opposite side surfaces of the lip.

According to the invention, it is possible to attain desired angle of deformation of the lip with respect to a wide range of load distribution.

Brief Description of the Drawings

Further objects and effects of the invention will become apparent from the following detailed description in conjunction with the drawings, in which:

Fig. 1 is a sectional view of a blade rubber according to an embodiment of the invention;

Fig. 2 is a sectional view of a typical prior art blade rubber;

Fig. 3 is a sectional view showing the blade rubber of Fig. 2 in the condition of usage;

Fig. 4 is a diagram showing the relationship between the contacting angle and the load of blade rubbers according to prior art and the invention;

Fig. 5 is a sectional view showing a second embodiment of the present invention, and

Fig. 6 is a modified form of the embodiment of Fig. 5.

Detailed Description of Preferred Embodiments

The blade rubber 5 shown in Fig. 1 comprises a generally rectangular shaped main body portion 6 which is formed by providing integrally projecting portions 7 and 7′ on opposite sides of a generally inverted triangular shaped lip portion (shown at broken lines), a lip 9 depending from the central portion of the lower end of the main body portion 6 and having a generally rectangular shaped configuration, and restricting portions 8 and 8′ depending respectively from the projecting portions 7 and 7′ and being spaced from the lip 9 respectively.

The restricting portions 8 and 8′ are effective for limiting the deformation of the lip 9 in a predetermined range so that the contacting angle of the lip 9 against the surface of the windshield in response to the load is limited to a desired range such as 35 to 60 degrees.

Fig.4 shows the relationship between the contacting angle α and the load applied on the blade rubber with respect to the present invention and prior art device shown in Figs. 2 and 3.

In Fig. 4, the change in the contacting angle α with respect to the load according to the blade rubber of the invention is shown in a solid line and that of prior art is shown in a broken line. The points P and P′ in Fig.4 are positions when respective shoulder portions or the upper side edges 6d (Fig. 1) and 1d (Fig. 2) contact with the lower surfaces of the supporting portions 3. As clearly shown in Fig. 4, according to the invention, it is possible to attain the optimum contacting angle in a very wide range of the load.

The embodiment shown in the drawing has integrally formed restricting portions, but the restricting portions may be provided separately from the main body of the blade rubber.

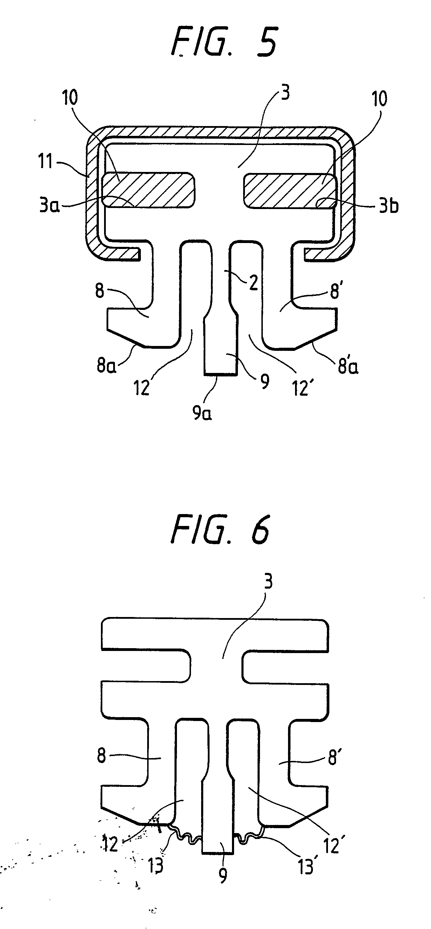

Fig. 5 shows the second embodiment. According to the embodiment, the lip 9 of a generally rectangular shaped configuration is connected integrally with the lower end of the supporting portion 3 through a relatively thin thickness connecting piece 2, and restricting portions 8 and 8′ are also connected integrally with the lower end of the supporting portion 3 and separately from the lip 9. There are normally formed recesses 12 and 12′ between the lip 9 and the restricting portions 8 and 8′. In the drawing there are also shown a wiperblade 11 and backing members 10 and 10. The backing members may be an integral member. The restricting portions 8 and 8′ have on the lower ends bulge portions 8a and 8′a which act to prevent reliably the wiperblade 11 from contacting with the surface of the glass being wiped, particularly, when the connecting portion 2 or the lip 9 has been damaged.

Fig. 6 shows a modified form, wherein the lower end portions of the lip 9 and the restricting portions 8 and 8′ are respectively connected by flexible covers 13 and 13′ so that the recesses l2 and 12′ are prevented from being filled by dust or dirt. The flexible covers may not necessarily be formed integrally with the lip 9 or with the restricting portions 8 and 8′ and, preferably connected to the lip 9 and the restricting portions 8 and 8′ through such as bonding agent.

As described heretofore in detail, it is possible to obtain the optimum contacting angle with respect to a wide range of the load distribution as compared with prior art device, whereby the wiping characteristics can be improved, the types and kinds of the blade can be reduced, and the cost of the blade rubber can also be reduced. It will be understood that the invention is not limited to the embodiment and various modifications or changes may easily be applied within the scope of the invention, and the lip of the present invention is not limited to have a rectangular form of strict geometrical meaning and may have any desired form of generally elongated configuration.

Claims

1. A blade rubber of a windshield wiper and comprising a supporting portion adapted to be connected to a wiperblade, a generally rectangular shaped lip connected to and supported by the supporting portion with the lower end of which being adapted to contact with a surface being wiped, and at least one restricting portion being provided adjacent to at least one side of the lip for preventing the lip from excessive resilient deformation.

2. A blade rubber as set forth in claim 1, wherein the restricting portion is provided on each side of the lip.

3. A blade rubber as set forth in either one of claims 1 and 2, wherein the lip is connected to the supporting portion integrally through a generally inverted triangular shaped lip portion with the central portion of the upper end of which being connected to the supporting portion through a thin thickness connecting portion and the lower end of which being connected integrally to the lip, and the restricting portion is provided integrally on one side of the lip portion and being normally spaced from the lip.

4. A blade rubber as set forth in claim 3, wherein the restricting portion is defined by a projecting portion integrally formed on one side surface of the lip portion and a vertically depending portion integrally formed on the lower end of the projecting portion with a predetermined space being formed from the lower end of the lip.

5. A blade rubber as set forth in either one of claims 1 and 2, wherein the lip is connected integrally to the supporting portion through a connecting portion, and the restricting portion is connected to the supporting portion independently from the lip.

6. A blade rubber as set forth in claim 5, wherein the space defined between the restricting portion and the lip is covered by a flexible cover.

## FIG. 1

## FIG. 2

## FIG. 3

## FIG. 4

## FIG. 5

## FIG. 6

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | DE-A-1 430 332 (TRICO)<br>* Page 12, line 24 - page 14, line 30; figures 2,4 * | 1,2,5 | B 60 S 1/38 |
| A | DE-A-3 205 573 (HÖSSL)<br>* Whole document * | 1,3,4 | |
| A | DE-C- 933 676 (BOSCH)<br>* Page 2, lines 27-45; figures 1-3 * | 1-4 | |
| A | FR-A-1 582 852 (CANTAT)<br>* Page 1, line 15 - page 2, line 17; figure 1 * | 1,2,6 | |

TECHNICAL FIELDS
SEARCHED (Int. Cl.4)

B 60 S

The present search report has been drawn up for all claims

| Place of search | Date of completion of the search | Examiner |
|---|---|---|
| THE HAGUE | 16-03-1989 | VERLEYE J. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)